# FASCICULE DE BREVET EUROPEEN

(11) **EP 1 228 932 B1**
(45) Date de publication et mention de la délivrance du brevet: **02.11.2005**
(21) Numéro de dépôt: 02002453.5
(22) Date de dépôt: 01.02.2002
(51) Int. Cl.: B60R 25/02

(54) **Antivol perfectionné pour véhicule automobile**
Verbessertes Lenkschloss für ein Kraftfahrzeug
Improved steering column lock for a car

(30) Priorité: 05.02.2001 FR 0101523
(43) Date de publication de la demande: 07.08.2002
(73) Titulaire: VALEO SECURITE HABITACLE S.A.S., 94042 Créteil Cédex (FR)
(72) Inventeur: Canard, M. Louis, 58000 Nevers (FR)
(74) Mandataire: Rosolen-Delarue, Katell

(56) Documents cités:
- DE-A- 19 909 421
- GB-A- 1 041 581

## Description

La présente invention concerne un antivol perfectionné pour véhicule automobile.

On connaît déjà dans l'état de la technique, notamment d'après EP-A-0 742 127, un antivol pour véhicule automobile du type comprenant :
- un rotor monté rotatif dans un stator entre une première position angulaire dite position « stop » et au moins une seconde position angulaire,
- le rotor commandant le déplacement d'un pêne de verrouillage d'une colonne de direction du véhicule entre des positions de verrouillage et de libération de la colonne.

Un bouton de commande, solidaire en rotation du rotor, forme un organe de commande manuelle du démarrage d'un moteur du véhicule et du verrouillage d'une colonne de direction du véhicule.

L'antivol décrit dans EP-A-0 742 127 est de type électronique. Un antivol de ce type comprend généralement un dispositif électronique d'identification constitué notamment d'un identifiant électronique, porté par un utilisateur du véhicule autorisé, et d'une unité d'identification de cet utilisateur autorisé, embarquée à bord du véhicule. L'identifiant électronique est constitué, par exemple, par un badge. L'antivol comprend également des moyens classiques de blocage en rotation du rotor destinés à interdire le déplacement de celui-ci tant qu'un utilisateur autorisé n'est pas identifié.

Pour commander le démarrage du moteur, le rotor est entraîné en rotation de façon à actionner un commutateur à plusieurs positions. Ainsi, le bouton de commande peut être placé successivement dans une première position angulaire extrême de repos, dite position "STOP", une position "ACCESSOIRES", une position "CONTACT" et une seconde position angulaire extrême, opposée à la première, dite position "DEMARRAGE".

Pour commander le verrouillage de la colonne de direction, certaines réglementations imposent de recourir à une action distincte de la rotation du bouton de commande.

Le document DE-A-199 09 421 présente un antivol générique pour véhicule automobile comportant un rotor monté rotatif dans un stator et destiné à recevoir une clé pour la commande du déplacement d'un pêne de verrouillage de la colonne de direction entre des position de verrouillage et de libération de la colonne. Cet antivol présente également des moyens de blocage du pêne dans sa position de libération de la colonne, libérables, lorsque le rotor est dans une position de verrouillage, par des moyens activés par un moteur contrôlé électroniquement notamment en fonction de la position d'insertion de la clé dans le rotor.

Dans le document GB-A-1 041 581 présentant un antivol générique de structure identique, dans lequel les moyens de blocage sont activés par déplacement du pêne de sa position de verrouillage vers sa position de libération et sont libérés par action de l'utilisateur sur un levier disposé à proximité de la zone d'insertion de la clé.

L'invention a pour but de proposer un antivol du type précité permettant notamment de satisfaire aux réglementations imposant de recourir à une action distincte de la rotation du bouton de commande pour verrouiller la colonne de direction et se distinguant de l'art antérieur.

A cet effet, l'invention a pour objet un antivol pour véhicule automobile tel que revendiqué dans la revendication 1.

Suivant d'autres caractéristiques de cet antivol :
- l'antivol comprend des moyens électroniques d'identification d'un utilisateur autorisé du véhicule susceptibles d'adopter au moins deux états de reconnaissance et de non reconnaissance d'un utilisateur autorisé, les moyens de libération des moyens de blocage étant activés lorsque l'état de non reconnaissance d'un utilisateur autorisé est adopté par les moyens d'identification ;
- le pêne est relié à une tirette de commande munie de premiers moyens de couplage avec le rotor et de seconds moyens de couplage avec la butée pivotante ;
- les premiers moyens de couplage comprennent des cames complémentaires portées par le rotor et la tirette coopérant entre elles pour transformer le mouvement de rotation du rotor en mouvement de translation de la tirette ;
- les seconds moyens de couplage comprennent une partie de la butée pivotante, formant fourchette, coopérant avec une extrémité complémentaire de la tirette ;
- la butée fixe est formée par une première extrémité d'une tige d'électroaimant, la seconde extrémité de cette tige formant une butée de blocage du rotor en position « stop » activée lorsque les moyens d'identification d'un utilisateur autorisé sont dans l'état de non reconnaissance d'un utilisateur autorisé ;
- l'axe de pivotement de la butée pivotante est sensiblement orthogonal à la direction de déplacement de la tige de l'électroaimant ;
- la butée pivotante est rappelée élastiquement angulairement dans une position de repos, opposée à sa position active ;
- la butée pivotante est rappelée élastiquement axialement dans un sens opposé à son sens d'escamotage ;
- la butée pivotante est rappelée élastiquement par un ressort ayant un effet angulaire autour de l'axe de pivotement de la butée pivotante et un effet axial parallèle à cet axe de pivotement.

L'invention sera mieux comprise à la lecture de la description qui va suivre, donnée uniquement à titre d'exemple et faite en se référant aux dessins dans lesquels :
- la figure 1 est une vue en perspective éclatée d'un antivol selon l'invention ;
- les figures 2 à 5 sont des vues en perspective d'une partie seulement de l'antivol représenté sur la figure 1, montrant cet antivol dans différentes configurations de fonctionnement respectivement.

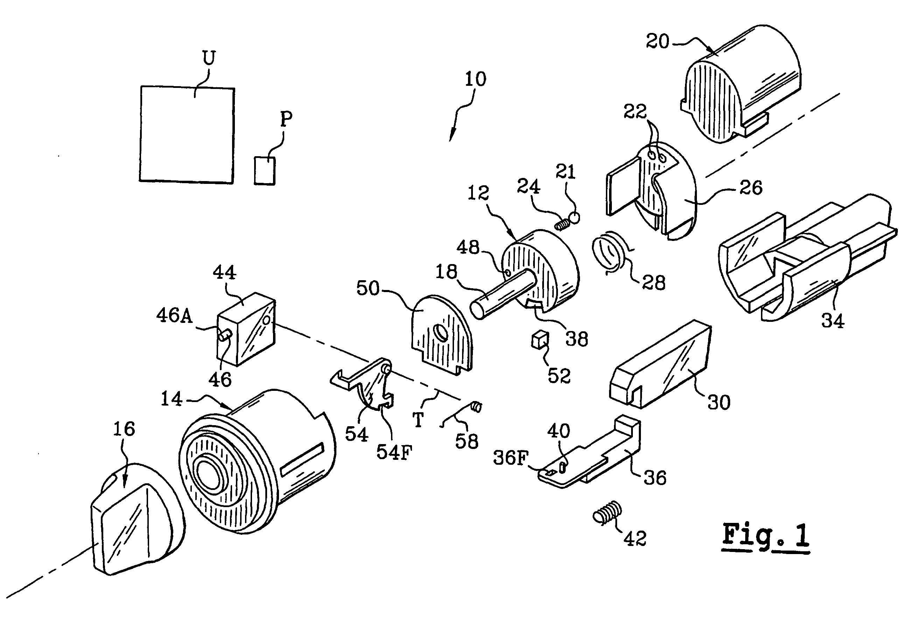

On a représenté sur la figure 1, un antivol électronique pour véhicule automobile, selon l'invention, désigné par la référence générale 10. Cet antivol 10 est destiné à commander le démarrage d'un moteur du véhicule et le verrouillage d'une colonne de direction du véhicule.

L'antivol 10 comprend un rotor 12 monté rotatif dans un stator 14. Le rotor 12 est entraîné en rotation au moyen d'un bouton de commande manuel 16 couplé en rotation à ce rotor 12 par une tige de commande 18.

Le rotor 12 est destiné à actionner un commutateur classique 20 à plusieurs positions. Le bouton de commande 16, solidaire en rotation du rotor 12, peut être placé, par exemple, dans une première position angulaire extrême de repos, dite position «stop», une position «accessoires», une position «contact» et une seconde position angulaire extrême, opposée à la première position extrême, dite position «démarrage».

Les différentes positions du bouton de commande 16 sont indexées à l'aide de moyens classiques comprenant, par exemple, une bille 21, portée par le rotor 12, destinée à coopérer avec différents évidements 22 ménagés dans un boîtier 26 solidaire du stator 14. La bille 21 est rappelée élastiquement dans une position d'emboîtement par un ressort 24.

Par ailleurs, le bouton de commande 16 est rappelée élastiquement depuis sa position «démarrage» vers sa position «contact» par un ressort 28 à effet angulaire agissant entre le rotor 12 et le boîtier 26.

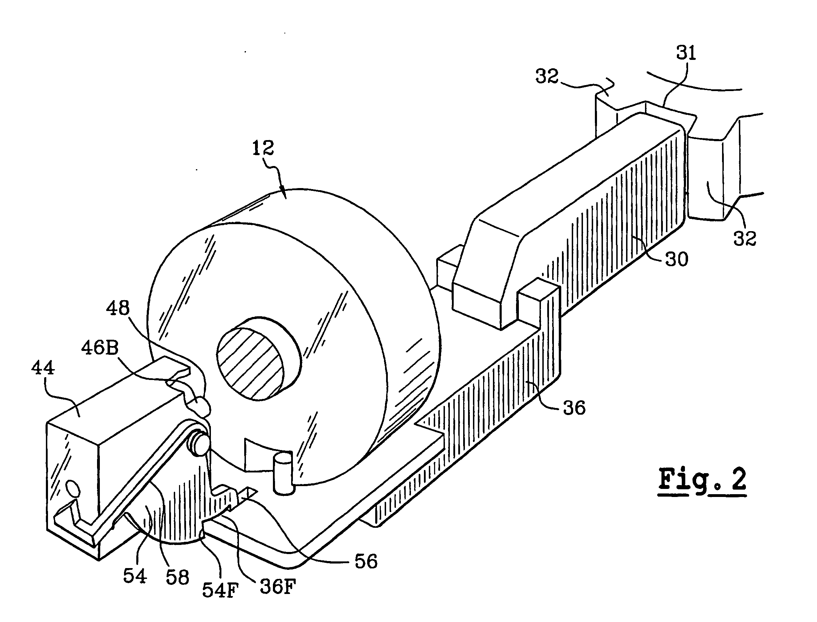

Le rotor 12 est destiné notamment à commander le déplacement d'un pêne 30 de verrouillage d'une colonne de direction du véhicule entre des positions de verrouillage et de libération de cette colonne. Conformément à un fonctionnement classique, le pêne 30 est destiné à coopérer avec une denture 31, portée par la colonne de direction, dont on a représenté deux dents successives 32 sur les figures 2 et suivantes.

Le pêne 30 est monté coulissant dans un guide 34 fixé sur le stator 14, par exemple par vissage. Le pêne 30 est relié, de façon connue en soi, à une tirette 36 de commande munie de premiers moyens de couplage avec le rotor 12. Ces premiers moyens de couplage comprennent, par exemple, une surface de came 38 ménagée dans le rotor 12, destinée à coopérer avec un doigt formant came 40 porté par la tirette 36, pour transformer le mouvement de rotation du rotor 12 en mouvement de translation de la tirette 36.

En position de verrouillage de la colonne de direction, le pêne 30 coopère avec les dents 32, de façon à s'emboîter partiellement entre deux dents 32 successives. En position de libération de la colonne de direction, le pêne 30 est séparé des dents 32.

La tirette 36 est rappelée élastiquement par un ressort 42 vers une position dans laquelle le pêne 30 verrouille la colonne de direction, comme cela est représenté notamment sur la figure 2.

L'antivol 10 est relié à des moyens électroniques classiques d'identification constitués notamment d'un identifiant électronique P, destiné à être porté par un utilisateur autorisé du véhicule, et d'une unité U d'identification de cet utilisateur autorisé, embarquée à bord du véhicule. L'identifiant électronique P est constitué, par exemple, par un badge.

Les moyens d'identification de l'utilisateur autorisé sont susceptibles d'adopter au moins deux états, respectivement, de reconnaissance et de non reconnaissance d'un utilisateur autorisé.

L'antivol 10 comprend également des premiers moyens de blocage du pêne 30 dans sa position de libération de la colonne de direction et des seconds moyens de blocage en rotation du rotor 12. Ces premiers et seconds moyens de blocage comprennent un électro-aimant commun 44, porté par le stator 14, muni d'une tige mobile 46 sensiblement parallèle à l'axe de rotation du rotor 12.

Une première extrémité 46A de la tige 46 est déplaçable entre une position escamotée et une position saillante de blocage du pêne 30 dans sa position de libération de la colonne. La seconde extrémité 46B de la tige 46 est déplaçable entre une position escamotée et une position saillante de blocage en rotation du rotor 12, notamment dans la position « stop» du bouton 16, comme cela est représenté sur la figure 2. En position de blocage du rotor 12, la seconde extrémité 46B de la tige est emboîtée dans un orifice 48 ménagé dans le rotor 12.

Lorsque la première extrémité 46A de la tige est saillante, la seconde extrémité 46B de cette tige est escamotée. Réciproquement, lorsque la seconde extrémité 46B de la tige de la tige est saillante, la première extrémité 46A de cette tige est escamotée.

Un circuit imprimé 50, portant des moyens électriques classiques de commande de l'électro-aimant 44, et un contacteur 52, destiné à détecter la position «stop» du rotor 12 et du bouton de commande 16, sont logés de façon connue en soi dans le stator 14.

Comme cela ressortira plus clairement par la suite, les premiers moyens de blocage du pêne 30 dans sa position de libération de la colonne sont libérables, lorsque le rotor 12 est en position «stop» (position détectée par le contacteur 52), par des moyens activés autrement que par un déplacement de ce rotor 12.

Les moyens électriques de commande portés par le circuit imprimé 50 sont reliés aux moyens d'identification d'utilisateur autorisé de façon à être informés de l'état de reconnaissance ou de non reconnaissance d'un utilisateur autorisé.

Les premiers moyens de blocage du pêne 30 conformes à l'exemple illustré sur les figures comprennent deux butées complémentaires dites «fixe » et «pivotante» respectivement.

La butée fixe est formée par la première extrémité 46A de la tige 46. L'escamotage de cette extrémité 46A permet de libérer les moyens de blocage du pêne en position de libération de la colonne.

La butée pivotante 54 est montée pivotante, autour d'un axe T, sur un organe porté par le stator 14, par exemple l'électro-aimant 44. La butée pivotante 54 est reliée au pêne 30 et escamotable, sensiblement parallèlement à l'axe T, par coopération avec la première extrémité 46A de la tige, comme cela sera décrit plus en détails ultérieurement. On notera que l'axe de pivotement T est sensiblement orthogonal à la direction de déplacement de la tige 46.

La tirette de commande 36 est munie de seconds moyens de couplage avec la butée de commande 54 comprenant, par exemple, une partie 54F de cette butée pivotante 54, formant fourchette, coopérant avec une extrémité complémentaire 36F de la tirette. La fourchette 54F est munie d'une branche destinée à s'emboîter dans un orifice 56 ménagé dans l'extrémité 36F de la tirette.

La butée pivotante 54 est rappelée élastiquement par un ressort 58 ayant une forme générale d'épingle.

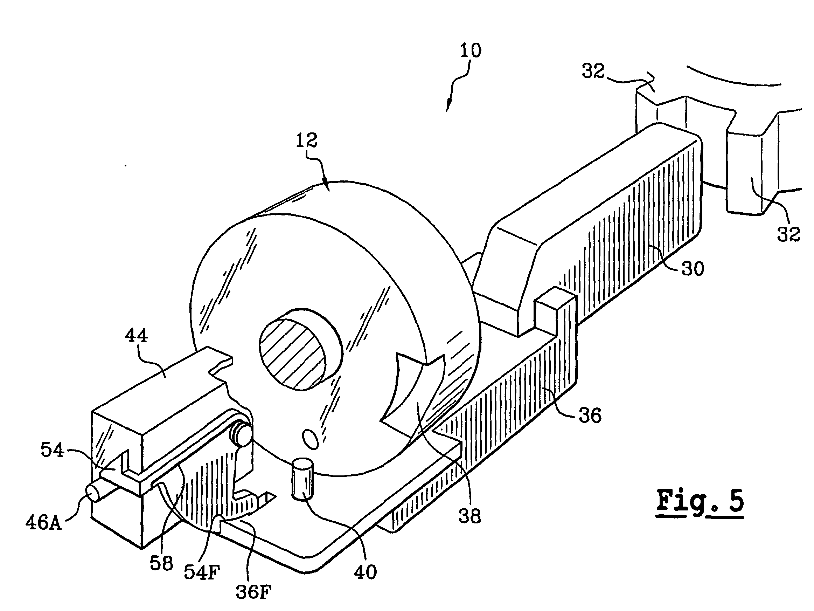

Ce ressort 58 a un effet angulaire autour de l'axe T de façon à rappeler élastiquement angulairement la butée pivotante 54 dans une position de repos, telle qu'illustrée sur la figure 2, opposée à une position active de blocage du pêne en position de libération de la colonne, telle qu'illustrée sur la figure 5.

Par ailleurs, le ressort 58 a un effet axial parallèle à l'axe T de façon à rappeler élastiquement axialement la butée pivotante 54 dans un sens opposé à son sens d'escamotage.

On précisera ci-dessous les principales étapes du fonctionnement de l'antivol 10 liées à l'invention, en se référant aux figures 2 à 5.

Initialement, l'antivol 10 est dans la configuration de verrouillage de la colonne de direction telle qu'illustrée sur la figure 2. Le pêne 30 coopère avec les dents 32. Le rotor 12 est bloqué en position «stop» par emboîtement de la seconde extrémité 46B de la tige d'électro-aimant avec l'orifice de blocage 48 ménagé dans le rotor. La première extrémité 46A de la tige est escamotée. La butée pivotante 54 est en position de repos.

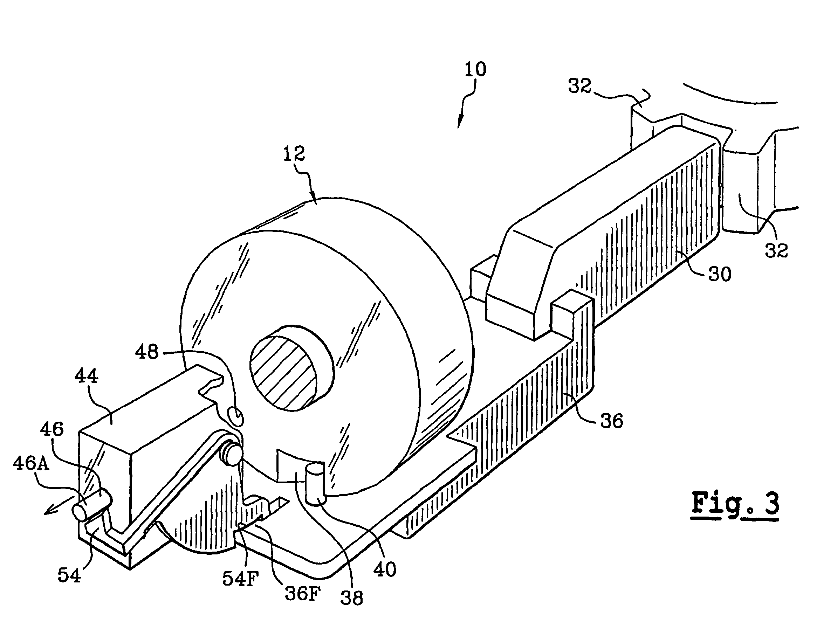

Lorsque les moyens d'identification sont dans un état de reconnaisance d'un utilisateur autorisé, les moyens de commande, portés par le circuit imprimé 50, alimentent l'électro-aimant 44 de façon à placer la première extrémité 46A de la tige, formant butée fixe, en position saillante et à escamoter la seconde extrémité 46B de la tige, comme cela est représenté sur la figure 3.

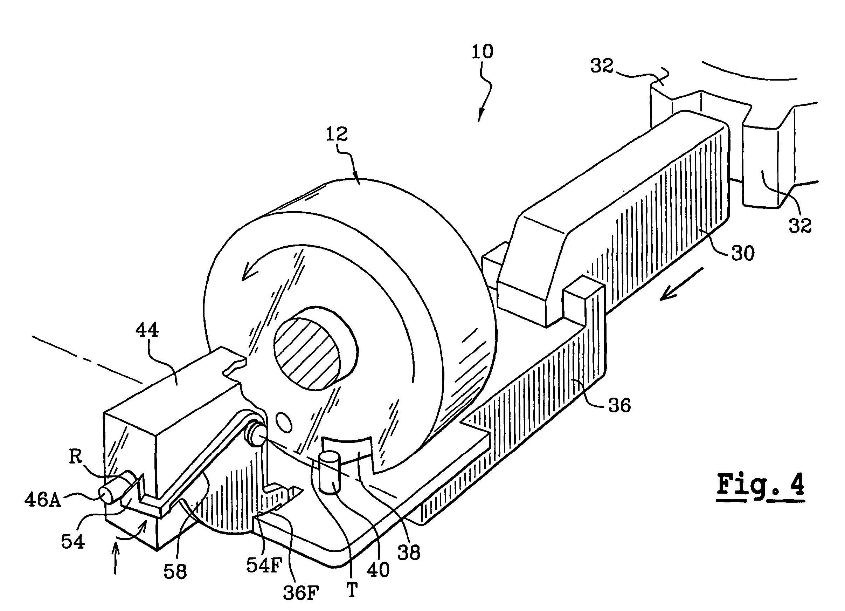

Les moyens de blocage du rotor 12 ayant été libérés, l'utilisateur peut tourner le bouton 16 de façon à entraîner le rotor 12 en rotation vers la position «accessoires», comme cela est représenté sur les figures 4 et 5. La surface de came 38 du rotor coopère alors avec le doigt 40 de la tirette 36, de façon à déplacer le pêne 30 de sa position de verrouillage vers sa position de libération de la colonne de direction, dans laquelle le pêne 30 est séparé des dents 32, comme cela est représenté sur la figure 5. Ce déplacement de la tirette 36, conjointement avec le pêne 30, a pour effet d'entraîner la butée pivotante 54 depuis sa position de repos vers sa position active.

La figure 4 illustre une position de la tirette 36 intermédiaire entre les positions «stop» et «accessoires» représentées respectivement sur les figures 3 et 5. Sur cette figure 4, on voit que, lors du déplacement du pêne 30 de sa position de verrouillage vers sa position de libération de la colonne de direction, une rampe R de la butée pivotante 54 coopère avec la première extrémité 46A de la tige de façon à escamoter cette butée pivotante 54 sensiblement parallèlement à l'axe T, à l'encontre de l'effet de rappel axial du ressort 58.

Lorsque le rotor 12 est dans la position «accessoires » représentée sur la figure 5, la butée pivotante 54 est maintenue en position active en appui sur la première extrémité 46A de la tige par l'effet de rappel angulaire du ressort 58. Dans cette position active, la butée pivotante 54 retient la tirette 36 à l'encontre de la force de rappel du ressort 42 de façon à bloquer le pêne 30 dans sa position de libération de la colonne. On notera donc que les moyens de blocage du pêne dans sa position de libération de la colonne sont activés par le déplacement du pêne 30, conjointement avec la tirette 36, de sa position de verrouillage vers sa position de libération de la colonne de direction.

L'utilisateur peut ensuite faire tourner le bouton 16 et le rotor 12 dans différentes positions, par exemple jusqu'à la position démarrage.

Lorsque l'utilisateur souhaite quitter le véhicule, il arrête le moteur de ce dernier en replaçant le bouton 16 et le rotor 12 dans la position «stop». La butée pivotante 54 demeure active, si bien que le pêne 30 est immobilisé dans sa position de libération de la colonne. La position «stop» du rotor 12 est détectée par le contacteur 52. Lorsque l'utilisateur quitte le véhicule, les moyens d'identification passent en état de non reconnaissance d'utilisateur autorisé. Les moyens de commande portés par le circuit imprimé 50, informés de la position « stop » du rotor 12 par le contacteur 52 et de l'état de non reconnaissance d'utilisateur autorisé, interrompent l'alimentation de l'électro-aimant 44, ce qui a pour effet d'escamoter la première extrémité 46A de la tige et d'activer les moyens de blocage du rotor en position «stop».

La butée pivotante 54 est alors rappelée élastiquement en position de repos par le ressort 58, la tirette 36 se déplaçant conjointement avec le pêne 30, sous l'effet de rappel élastique du ressort 42, pour placer ce pêne 30 dans sa position de verrouillage de la colonne, comme cela est représenté sur la figure 2.

L'invention ne se limite pas au mode de réalisation décrit ci-dessus. En particulier, la libération des moyens de blocage du pêne dans sa position de libération de la colonne peut être commandée par une autre information que l'état de non reconnaissance d'un utilisateur autorisé, par exemple, par une information sur un état de condamnation des portes du véhicule.

Parmi les avantages de l'invention, on notera que celle-ci permet notamment de satisfaire aux réglementations imposant de recourir à une action distincte de la rotation du bouton de commande pour verrouiller la colonne de direction, ceci avec des moyens simples et fiables.

## Revendications

1. Antivol pour véhicule automobile du type comprenant :
- un rotor (12) monté rotatif dans un stator (14) entre une première position angulaire dite position « stop » et au moins une seconde position angulaire, le rotor (12) commandant le déplacement d'un pêne (30) de verrouillage d'une colonne de direction du véhicule entre des positions de verrouillage et de libération de la colonne, et
- des moyens (46A, 54) de blocage du pêne (30) dans sa position de libération de la colonne, libérables, lorsque le rotor (12) est en position « stop », par des moyens (50) activés autrement que par un déplacement du rotor (12);
**Caractérisé en ce que** les moyens de blocage du pêne (30) comprennent :
- une butée fixe (46A), escamotable pour libérer les moyens de blocage (46A, 54), et
- une butée pivotante (54), reliée au pêne (30), escamotable sensiblement parallèlement à un axe (T) de pivotement de la butée pivotante (54), par coopération avec la butée fixe (46A) lorsque la butée pivotante (54) est entraînée vers une position active par le déplacement du pêne (30) de sa position de verrouillage vers sa position de libération de la colonne de direction.

2. Antivol selon la revendication 1, **caractérisé en ce qu'**il comprend des moyens électroniques (U, P) d'identification d'un utilisateur autorisé du véhicule susceptibles d'adopter au moins deux états respectivement de reconnaissance et de non reconnaissance d'un utilisateur autorisé, les moyens (50) de libération des moyens de blocage (46A, 54) étant activés lorsque l'état de non reconnaissance d'un utilisateur autorisé est adopté par les moyens d'identification (U, P).

3. Antivol selon la revendication 1 ou 2, **caractérisé en ce que** le pêne (30) est relié à une tirette (36) de commande munie de premiers moyens (40) de couplage avec le rotor (12) et de seconds moyens (36F) de couplage avec la butée pivotante (54).

4. Antivol selon la revendication 3, **caractérisé en ce que** les premiers moyens de couplage comprennent des cames complémentaires (38, 40) portées par le rotor (12) et la tirette (36) coopérant entre elles pour transformer le mouvement de rotation du rotor (12) en mouvement de translation de la tirette (36).

5. Antivol selon la revendication 3 ou 4, **caractérisé en ce que** les seconds moyens de couplage comprennent une partie (54F) de la butée pivotante (54), formant fourchette, coopérant avec une extrémité complémentaire (36F) de la tirette (36).

6. Antivol selon l'une quelconque des revendicationsprécédentes, **caractérisé en ce que** la butée fixe est formée par une première extrémité (46A) d'une tige (46) d'électroaimant (44), la seconde extrémité (46B) de cette tige (46) formant une butée de blocage du rotor (12) en position « stop » activée lorsque les moyens (U,P) d'identification d'un utilisateur autorisé sont dans l'état de non reconnaissance d'un utilisateur autorisé.

7. Antivol selonla revendication 6, **caractérisé en ce que** l'axe (T) de pivotement de la butée pivotante (54) est sensiblement orthogonal à la direction de déplacement de la tige (46) de l'électroaimant.

8. Antivol selon l'une quelconque des revendicationsprécédentes, **caractérisé en ce que** la butée pivotante (54) est rappelée élastiquement angulairement dans une position de repos, opposée à sa position active.

9. Antivol selon l'une quelconque des revendications précédentes, **caractérisé en ce que** la butée pivotante (54) est rappelée élastiquement axialement dans un sens opposé à son sens d'escamotage.

10. Antivol selon les revendications 8 et 9 prises ensemble, **caractérisé en ce que** la butée pivotante (54) est rappelée élastiquement par un ressort (28) ayant un effet angulaire autour de l'axe (T) de pivotement de la butée pivotante (54) et un effet axial parallèle à cet axe de pivotement (T).

## Patentansprüche

1. Diebstahlsicherung für ein Kraftfahrzeug, vom Typ mit:
- einem Rotor (12), der in einem Stator (14) zwischen einer ersten sogenannten "Stop"-Winkelstellung und zumindest einer zweiten Winkelstellung drehbar gelagert ist, wobei der Rotor (12) die Verlagerung eines Riegels (30) zum Verriegeln einer Lenksäule des Fahrzeugs zwischen einer Lenksäulenverriegelungsstellung und einer -freigabestellung steuert, und
- Mitteln (46A, 54) zum Arretieren des Riegels (30) in seiner Lenksäulenfreigabestellung, die dann, wenn der Rotor (12) sich in "Stop"-Stellung befindet, über Mittel (50) lösbar sind, die anders als durch Verlagerung des Rotors (12) aktiviert werden,
**dadurch gekennzeichnet, dass** die Mittel zum Arretieren des Riegels (30) enthalten:
- einen festen Anschlag (46A), der wegbewegbar ist, um die Arretiermittel (46A, 54) freizugeben, und
- einen verschwenkbaren Anschlag (54), der mit dem Riegel (30) verbunden ist und im wesentlichen parallel zu einer Schwenkachse (T) des verschwenkbaren Anschlags (54) durch Zusammenwirken mit dem festen Anschlag (46A) wegbewegbar ist, wenn der verschwenkbare Anschlag (54) aufgrund der Verlagerung des Riegels (30) aus seiner Verriegelungsstellung in seine Lenksäulenfreigabestellung in eine aktive Stellung mitgenommen wird.

2. Diebstahlsicherung nach Anspruch 1, **dadurch gekennzeichnet, dass** sie elektronische Mittel (U, P) zum Identifizieren eines berechtigten Fahrzeugbenutzers enthält, die zumindest zwei Zustände der Erkennung bzw. Nichterkennung eines berechtigten Benutzers annehmen können, wobei die Mittel (50) zum Freigeben der Arretiermittel (46A, 54) aktiviert werden, wenn von den Identifikationsmitteln (U, P) der Zustand der Nichterkennung eines berechtigten Benutzers eingenommen wird.

3. Diebstahlsicherung nach Anspruch 1 oder 2, **dadurch gekennzeichnet, dass** der Riegel (30) mit einem Betätigungszug (36) verbunden ist, der mit ersten Mitteln (40) zum Koppeln mit dem Rotor (12) und mit zweiten Mitteln (36F) zum Koppeln mit dem verschwenkbaren Anschlag (54) ausgestattet ist.

4. Diebstahlsicherung nach Anspruch 3, **dadurch gekennzeichnet, dass** die ersten Kopplungsmittel komplementäre Eingriffsmittel (38, 40) enthalten, die von dem Rotor (12) bzw. von dem Betätigungszug (36) getragen werden und miteinander zusammenwirken, um die Drehbewegung des Rotors (12) in eine Verschiebebewegung des Betätigungszugs (36) umzuwandeln.

5. Diebstahlsicherung nach Anspruch 3 oder 4, **dadurch gekennzeichnet, dass** die zweiten Kopplungsmittel einen gabelartigen Teil (54F) des verschwenkbaren Anschlags (54) enthalten, der mit einem komplementären Ende (36F) des Betätigungszugs (36) zusammenwirkt.

6. Diebstahlsicherung nach einem der vorangehenden Ansprüche, **dadurch gekennzeichnet, dass** der feste Anschlag aus einem ersten Ende (46A) eines Stifts (46) eines Elektromagneten (44) gebildet ist, wobei das zweite Ende (46B) dieses Stifts (46) einen Anschlag zum Arretieren des Rotors (12) in der "Stop"-Stellung bildet, der dann aktiviert wird, wenn die Mittel (U, P) zum Identifizieren eines berechtigten Benutzers sich im Zustand der Nichterkennung eines berechtigten Benutzers befinden.

7. Diebstahlsicherung nach Anspruch 6, **dadurch gekennzeichnet, dass** die Schwenkachse (T) des verschwenkbaren Anschlags (54) im wesentlichen orthogonal zur Verlagerungsrichtung des Stifts (46) des Elektromagneten verläuft.

8. Diebstahlsicherung nach einem der vorangehenden Ansprüche, **dadurch gekennzeichnet, dass** der verschwenkbare Anschlag (54) über einen Winkel elastisch in eine Ruhestellung zurückgestellt wird, die seiner aktiven Stellung entgegengesetzt ist.

9. Diebstahlsicherung nach einem der vorangehenden Ansprüche, **dadurch gekennzeichnet, dass** der verschwenkbare Anschlag (54) elastisch axial in einer Richtung zurückgestellt wird, die der Richtung seiner Wegbewegung entgegengesetzt ist.

10. Diebstahlsicherung nach Anspruch 8 und 9 zusammengenommen, **dadurch gekennzeichnet, dass** der verschwenkbare Anschlag (54) von einer Feder (28) elastisch zurückgestellt wird, die eine Winkelwirkung um die Schwenkachse (T) des verschwenkbaren Anschlags (54) und eine axiale Wirkung parallel zu dieser Schwenkachse (T) hat.

## Claims

1. Anti-theft device for automobile vehicle of the type including:
- a rotor (12) mounted free to rotate in a stator (14) between a first angular position called the "stop" position and at least one second angular position, the rotor (12) controlling displacement of a lock bolt (30) that locks a vehicle steering column between the locked and released positions of the column, and
- means (46A, 54) of locking the lock bolt (30) in its column released position, that can be released when the rotor (12) is in its "stop" position, by means (50) activated other than by displacement of the rotor (12);
**characterised in that** the locking means of the lock bolt (30) comprise:
- a fixed stop (48A) that can be retracted to release the locking means (46A, 54) and
- a pivoting stop (54) connected to the lock bolt (30), retractable approximately parallel to a pivoting axis (T) of the pivoting stop (54) by cooperation with the fixed stop (48A) when the pivoting stop (54) is driven towards an active position by displacement of the lock bolt (30) from its locked position to its steering column released position.

2. Anti-theft device according to claim 1, **characterised in that** it comprises electronic means (U, P) of identifying an authorised user of the vehicle that can be in at least two states, namely recognition and non-recognition of an authorised user, the means (50) of releasing the locking means (46A, 54) being activated when the non-recognition state of an authorised user is adopted by the identification means (U, P).

3. Anti-theft device according to claim 1 or 2, **characterised in that** the lock bolt (30) is connected to a tie-rod (36) provided with first means (40) of coupling with the rotor (12) and second means (36F) of coupling with the pivoting stop (54).

4. Anti-theft device according to claim 3, **characterised in that** the first coupling means include complementary cams (38, 40) carried by the rotor (12) and the tie-rod (36) cooperating with each other to transform the rotation movement of the rotor (12) into a translation movement of the tie-rod (36).

5. Anti-theft device according to claim 3 or 4, **characterised in that** the second coupling means comprise a part (54F) of the pivoting stop (54) forming a fork, cooperating with a complementary end (36F) of the tie-rod (36).

6. Anti-theft device according to any one of the previous claims, **characterised in that** the fixed stop is formed by a first end (46A) of a rod (46) of an electromagnet (44), the second end (46B) of this rod (46) forming a locking stop of the rotor (12) in the "stop" position activated when the means (U,P) of identification of an authorised user are in the authorised user not recognised state.

7. Anti-theft device according to claim 6, **characterised in that** the pivoting axis (T) of the pivoting stop (54) is approximately orthogonal to the direction of displacement of the rod (46) of the electromagnet.

8. Anti-theft device according to any one of the previous claims, **characterised in that** the pivoting stop (54) is elastically returned to an angle at which it is in a rest position, opposite its active position.

9. Anti-theft device according to any one of the previous claims, **characterised in that** the pivoting stop (54) is elastically returned along the axial direction opposite to the direction of retraction.

10. Anti-theft device according to claims 8 and 9 combined, **characterised in that** the pivoting stop (54) is elastically returned by a spring (28) varying the angle about the pivoting axis (T) of the pivoting stop (54) and an axial effect parallel to this pivoting axis (T).
